# EUROPEAN PATENT SPECIFICATION

(11) **EP 2 902 685 B1**
(45) Date of publication and mention of the grant of the patent: **04.01.2017**
(21) Application number: 15153100.1
(22) Date of filing: 29.01.2015
(51) Int. Cl.: F16L 1/26, F16L 55/172, F16L 55/175

(54) **Method for repairing flexible flow lines with a two-piece clamping collar and composite material**
Verfahren zur Reparatur flexibler Leitungen mit zweiteiligem Klemmring und Verbundmaterial
Procédé pour réparer des lignes d'écoulement flexibles avec un collier de serrage en deux parties et matériau composite

(30) Priority: 30.01.2014 BR 102014002292
(43) Date of publication of application: 05.08.2015
(73) Proprietor: PETRÓLEO BRASILEIRO S.A. - PETROBRAS, Rio de Janeiro (BR)
(72) Inventor: Pamplona, Heraldo Raimundo Pinto, 27925-290 Rio de Janeiro (BR)
(74) Representative: Cooney, Daniel Thomas

(56) References cited:
- EP-A2- 0 697 552
- WO-A1-96/19694
- GB-A- 2 427 449
- GB-A- 2 442 295
- US-A1- 2004 129 373
- US-B2- 7 500 494
- Roland Palmer-Jones ET AL: "THE FLEXIBLE GROUTED CLAMP - A NOVEL APPROACH TO EMERGENCY PIPELINE REPAIR", Rio Pipeline Conference & Exposition 2011, 22 September 2011 (2011-09-22), pages 1-13, XP55190072, Retrieved from the Internet: URL:http://www.penspen.com/wp-content/uplo ads/2014/09/flexible-grouted-clamp.pdf [retrieved on 2015-05-19]

## Description

The present invention relates to a method to repair flexible flow lines used in the petroleum industry. This method enables the quick repair of a flexible duct displaying a birdcage (BC) type failure without interrupting production flows. The technology proposed, because of its simple characteristics, eliminates the need for replacing the affected section.

In offshore petroleum production systems, the petroleum produced by wells located on the ocean floor is carried to stationary production units (SPU) using pipes. The set of pipes used to inject water and pump oil and gas is conventionally known as flow lines.

This set of pipes, which comprises the flow lines, can be basically split into two different types: rigid and flexible, and extend from the producing well to the platform, to which they are connected using support structures especially designed to support and resist the stresses that result both from their own weight and their movement.

Flexible flow lines may be described as being ducts comprising the overlaying independent layers, often at least six, of different composition: the first and innermost layer is the inner carcass, followed by a polymeric pressure sheath; this is followed by the pressure armour, the internal tensile armour and the external tensile armour, which comprise braided steel wire. Over all of these, there is usually an external polymeric sheath. Other constructions are also possible.

A preliminary inventory of the applicant's huge industrial estate shows that there are currently some 5,000 kilometres of flexible ducts operating in the different Brazilian sedimentary basins, with diameters ranging from 7 to 45 centimetres.

Thus, the collection of flexible ducts in Brazil is quite heterogeneous. Different production units have flexible ducts of different diameters and different ages. Added to this scenario, we have the internal pressure caused by the fluids conveyed, the external pressure exerted by the environment, the internal friction between the various layers comprising the duct, corrosion and fatigue. In addition to these, there are all manner of influences caused by the environment in which each structure is assembled, such as marine currents, salinity, changing tides, waves, incrustations with living organisms and external impacts.

This data demonstrates the value of preventive maintenance techniques and the importance of searching for efficient and quick techniques for corrective maintenance.

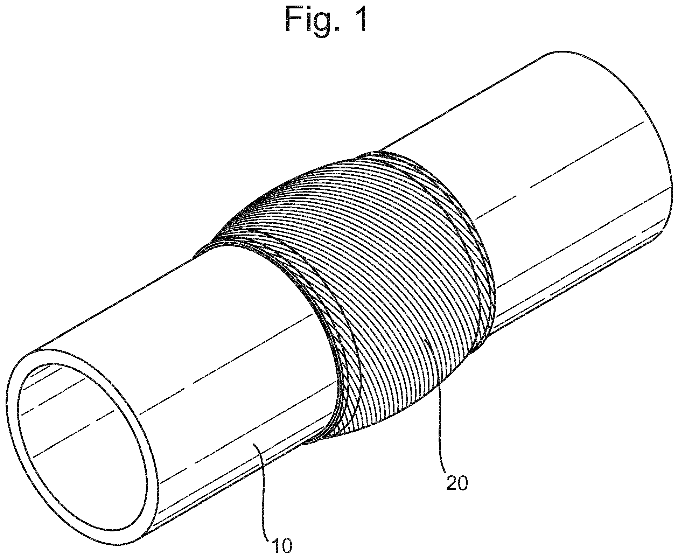

In spite of all the precautions taken to prevent failure, among the failures that can happen is a characteristic phenomenon that is regularly found in flexible ducts, known as birdcaging (illustrated in Fig. 1, which shows a birdcage failure 20 on a flexible line 10). This structural failure is the result of, among other factors, sudden and instantaneous depressurising of the duct, which causes radial expansion of the outermost tensile armour through tears in the outer sheath.

Briefly, the failure is due to tears in the outer polymeric sheath, in general associated with the effects caused by said depressurisation of the duct, causing the steel braid lying immediately under it to be exposed to an aggressive medium. Furthermore, the absence of any sheath effect exerted by the outermost polymer layer on the section of duct bearing the tear allows the internal pressure of the duct to push the successive layers in this region outwards, further exposing the steel braid that was uncovered by the tear, thus giving rise to failures that look like a "birdcage" (BC).

This type of failure not only changes the standard distribution of the stresses along the various layers comprising the flexible duct, it also results in faster action of the aggressive medium on the outer structural steel braid and the polymer layer immediately under it, which are exposed directly to the marine environment.

Defects such as these seriously compromise the integrity of the line, weakening the wires in the duct structure due to corrosion. Thus, as a safety measure, once a defect is identified it is usually recommended that use of the defective duct be suspended until the damaged section can be replaced with a new one.

According to current prior art, this is achieved by replacing the damaged section. However, an intervention to replace a section of flexible duct where birdcaging has been detected involves mobilizing special PLSV (*Pipe-Laying Support Vessels)* and drilling rigs, making the operation quite costly. The intervention also takes a long time, as much as 15 to 16 days.

One must also consider the availability of special vessels and equipment to perform the repair procedure. Production losses to prepare the line are considerable, and currently there are no alternative methods to correct this type of defect in flexible ducts.

It is clear that a large petroleum concern requires a technical and administrative structure dedicated to the periodic inspection and correction of sections that are damaged or under imminent risk of leakage. Despite all efforts to this effect, the extension and different types of flexible ducts that comprise the Brazilian industrial park results in a vendor funnel in terms of the availability of the materials required, such as flexible duct sections and connections of a diameter corresponding to the damaged sections. These hurdles can delay such an intervention for months.

There is a varied history of devices whose purpose is to repair rigid ducts exhibiting some form of wall failure.

Document US 5,027,862 of 2 July 1991 refers to basic technology to repair rigid ducts whereby a resin is applied around the duct, encapsulated in a casing.

Document US 6, 305,719 of 23 October 2001 refers to clamps provided with seals, both two-component, applied around the affected section of a duct, with the possibility of applying some sort of sealant inside the clamps.

Document US 2004/0129373 of 8 July 2004 describes a method to permanently repair damaged or weakened ducts. The method comprises of removing the rust, the old coating and other undesired surface defects with an abrasive jet. The damaged or weakened surface is then packed in a wrap comprising at least one layer of reinforced composite material. The composite wrap is allowed to cure. If necessary to provide mechanical strength to the affected section of the duct, the affected area is enclosed in sleeves.

Document US 7,500,494 of 10 March 2009 also refers to a method to repair or reinforce damaged ducts. A layer of fibre is placed around the duct and a clamp is placed around it. Resin is injected so as to permeate the fibres applied.

One can also mention documents such as *"*The flexible grouted clamp - A novel approach to emergency pipeline repair" by Roland Palmer-Jones, Gordon Paterson and Glenn Aldo Nespeca, presented at the 2011 Pipeline Conference & Exposition. Said paper also discusses attempts to repair ducts, and shows the extent to which this is a contemporary problem, requiring constant research and searching for suitable solutions.

GB 2,427,449 discloses a sealing clamp for a pipe that comprises, prior to deployment, two generally semi-circular clamp parts and means for drawing the clamp parts together along their edges about the pipe, each clamp half having a groove near each end containing a deformable seal and an infill between the grooves. The infill may be an elastomeric material, gels, closed cell foams, pastes or heavy grease and is preferably non-corrosive. A one-way valve may serve as a vent for excess infill to be exhausted. Anti-extrusion plates can be provided to protect the deformable seals. The clamps halves may be pulled together using studs/bolts and nuts.

EP 0,697,552 discloses a method consisting of an abrasion-and-tear resistant resin mantle that reaches the curing point upon contact with the water. The mantle is applied, over the damage, around the piping by means of a flexible sleeve that serves as a containment cast, and by means of a hydraulic tool specifically conceived for the repair operation.

WO 96/19694 discloses a method to be used when jointing pipe sections respectively repairing damage, e.g. corrosion damage, on a section of a pipeline. Two interconnectable joint socket parts are used, together substantially defining a circular cross section. Each joint socket part has a radius somewhat exceeding the radius of said pipe sections/pipe section, so that an annulus is formed between interconnected joint socket parts and pipe sections/pipe section, for the accommodation of a sealing mass. In order to effect the anchoring and centering of the joint socket in relation to said pipe sections/section to be surrounded thereby, the joint socket parts have radially directed, threaded bores for set screws or similar combined anchoring and spacing means, e.g. screws have a pointed free end adapted to dig itself into the surface material layer of the pipe surrounded by the joint socket. At the two ends of the joint socket device, there has been provided sealing with respect to surrounded pipe sections/pipe section. The contact face of the two joint socket parts are surface ground.

GB 2,442,295 discloses a means of repairing piping by enabling leak-sealing compounds to be held firmly in place against a leak or leaks during the hardening of the compound, of especial use where leaks in pipes are difficult to reach and manual holding of sealing compounds in place is uncomfortable or not practicable. Examples are secured around the piping by separate straps or may have integral straps, and may be used on straight or curved sections of piping. Sealing compounds may be pre-packed with the sleeve or may be applied to them, or to the leaking area of the piping, immediately before use of the sleeve.

The present invention was developed with the idea of repairing birdcage-type failures in flexible ducts used in the oil industry, but has wider application to other types of defects too.

Thus, a method has been developed to repair flexible flow lines using a two-piece clamping collar and a composite material.

The invention described herein is the result of continuous research in this area, the aim of which is to simplify the procedure currently employed, reducing the time taken for each repair and the overall cost of each intervention. It also aims to provide a new concept in the repair of flexible ducts, whereby the line and its original geometry are maintained, including the wire armour mesh.

Other advantages this method to repair flexible ducts proposes to deliver are listed below:
1. At least partially eliminate the need to interrupt production before or during corrective maintenance;
2. At least partially eliminate the need for special PLSVs (Pipe Laying Support Vessels) and drilling rigs;
3. At least partially eliminate the need to replace the damaged section;
4. At least partially simplify the repair procedure;
5. At least partially improve the performance of the damaged line;
6. At least partially make each intervention more agile;
7. At least partially eliminate the dependence on section and connector vendors.

According to a first aspect of the present invention there is provided a method for repairing a defect in a flexible flow line, the method characterised by comprising the following steps: providing a two-piece clamping collar; preparing a composite resin; splitting the total volume of composite resin into two, and packing each one in a separate fabric bag, each bag having a warp of natural fibres; attaching a first one of the bags of composite resin to the inside of a first one of the pieces of the two-piece clamping collar, and attaching a second one of the bags of composite resin to the inside of a second one of the pieces of the two-piece clamping collar; placing the two-piece clamping collar around the region of the flexible flow line containing the failure; and securing said two-piece clamping collar with some means of fastening.

The provision of the resin in the natural fibre bags allows for the resin to be transported and positioned on the defect without leakage, and then for the resin to seep through the bags when the collar is fastened and clamped down on the bags around the flexible flow line. Optionally each bag has a weave where the space between threads is in the range of from 0.2 mm to 1.5 mm, and optionally from 0.5 mm to 1.0 mm.

Optionally the flexible flow line is underwater. The method allows time for the repair to be pre-assembled on land, and then positioned underwater.

Optionally, the defect is a birdcage-type failure.

Optionally, preparing the composite resin further comprises dosing the resin with curing agent based on the descent time to the flexible flow line so that, once mixed, the resin will arrive at the flexible flow line sufficiently malleable to penetrate the mesh of the birdcage failure. Optionally, the dosing of the resin is also based on the temperature at the location of the birdcage failure, and/or the depth and and/or pressure at the location of the failure.

Optionally, the method can further comprise reducing the operating pressure in the line until the birdcage failure contracts, and the defect can be slightly compressed during the step securing said two-piece clamping collar.

Optionally, the composite resin is a composite epoxy resin reinforced with aramid type synthetic fibres. Optionally the composite resin has a degree of malleability that is equivalent to a consistency between 0.4 and 0.7 N.s/m², optionally 0.5 and 0.6 N.s/m², at the temperature at the defect location.

Optionally, the volume of composite resin used for the repair is at least the volume of the annular space created between the outer wall of the flexible duct and the inside diameter of the two-piece clamping collar to be manufactured, and optionally includes from 20% to 30% more than that volume.

Optionally, the steps of placing and securing are performed by an ROV (remotely operated vehicle).

Optionally, the two-piece clamping collar fulfils one or more of the following parameters: being manufactured of steel; having an inside diameter up to 15% larger than the nominal design diameter of the flexible duct in question; being provided with through-holes of up to 10 mm in diameter, optionally up to 6 mm in diameter, arrayed circumferentially around the clamp at intervals of from 40 to 60 mm, optionally 50 mm, along the surface of each half-section of the two-piece clamping collar.

Optionally, the fastening means is selected from among bolts, jaws and quick-connect devices.

According to another aspect the invention provides a kit for repairing a defect in a flexible flow line, the kit comprising: a two-piece clamping collar; a composite resin; two fabric bags, each bag having a warp of natural fibres, and each bag being packed with part of the composite resin; means for attaching a first one of the fabric bags to the inside of a first one of the pieces of the two-piece clamping collar, and attaching a second one of the fabric bags to the inside of a second one of the pieces of the two-piece clamping collar; means for fastening for securing said two-piece clamping collar around a defect in a flexible flow line.

The present invention comprises a method to repair flexible duct, essentially following the steps of: visually inspecting the condition of the outer polymeric layer; determining the dimensions of the failure; determining the depth and temperature where the defect is located, and the descent time; determining the dimensional parameters of the duct to be repaired; cleaning the exposed steel mesh and the surface of the polymer sheath on the section of duct to be repaired; on land, manufacturing the two-piece clamping collar to be used; calculating the volume of epoxy resin required for the repair procedure; preparing the composite resin so that, once it is mixed, it will arrive at the location where it will be applied sufficiently malleable so as to penetrate the birdcage mesh; splitting the total volume of composite resin into two equal volumes, and pack each one in a fabric bag with a warp of natural fibres; attaching each bag of composite resin to the inside of each section of the two-piece clamping collar; placing all of the material in the ROV (Remotely Operated Vehicle); reducing the operating pressure in the line; lowering the two-piece clamping collar with the fabric bags filled with composite resin to the location where the failure is within a pre-determined amount of time; placing the two-piece clamping collar around the section with the failure and attaching it using suitable means.

A method for repairing a flexible flow line duct using a two-piece clamping collar and composite material, comprises permanently repairing the failure in damaged ducts, applying resin around the damaged area and subsequently placing a two-piece clamping collar around the section, and is characterised by comprising the following steps:
1) visually inspecting the state of repair of the outer polymeric layer on site;
2) measuring the size of the birdcage failure on site;
3) determining the depth and temperature at the location of the defect, and the descent time, preferably concomitantly with step 1 or step 2;
4) determining the dimensional parameters of the duct to be repaired, available in the manufacturer's data sheet;
5) thoroughly cleaning the exposed steel mesh, as well as the surface of the polymer sheath in the section of duct to be repaired;
6) on land and together with step 6, arranging for the manufacture of the two-piece clamping collar to be used, which should meet the following parameters;
7) calculating the volume of epoxy resin required for the repair procedure;
8) preparing the composite resin before the components are lowered to the location where it will be applied, in such a way that the curing agent is dosed based on the descent time calculated in Step 3, so that once mixed, the resin will arrive at the application location sufficiently malleable to penetrate the birdcage mesh;
9) splitting the total volume of composite resin into two equal volumes, and packing each one in a fabric bag with a warp of natural fibres;
10) attaching each bag of composite resin to the inside of each section of the two-piece clamping collar;
11) placing all of the material in an ROV (Remotely Operated Vehicle);
12) reducing the operating pressure in the line until the birdcage failure contracts and the layers before the steel mesh can be slightly compressed;
13) lowering the two-piece clamping collar with the fabric bags filled with composite resin to the location of the failure, within the period of time calculated in step 3;
14) placing the two-piece clamping collar around the region containing the failure;
15) securing said two-piece clamping collar with some means of fastening.

The method for repairing a flexible flow line duct with a two-piece clamping collar and composite material can be characterised by the fact that the data gathering in steps 1 and 2 may be performed by divers or an ROV, depending on the depth.

The method for repairing a flexible flow line duct with a two-piece clamping collar and composite material can be characterised by the two-piece clamping collar being manufactured according to the following parameters:
being preferably manufactured of steel;
having an inside diameter up to 15% larger than the nominal design diameter of the flexible duct in question;
being provided with through-holes of up to 6 mm in diameter, arrayed circumferentially around the clamp at intervals of about 50 mm along the surface of each half-section of the two-piece clamping collar;
having a degree of mechanical resistance that is compatible with the parameters collected in step 4;
having a length that is compatible with the parameters collected in step 2.

The method for repairing a flexible flow line duct with a two-piece clamping collar and composite material, can be characterised by the calculation of the volume of composite resin required for the repair being given by the volume of the annular space created between the outer wall of the flexible duct and the inside diameter of the two-piece clamping collar to be manufactured, plus 20 to 30%.

The method for repairing a flexible flow line duct with a two-piece clamping collar and composite can be characterised by the composite resin having the following minimum characteristics:
- being a composite epoxy resin reinforced with aramid type synthetic fibres;
- having a degree of malleability that is equivalent to a consistency preferably between 0.5 and 0.6 N.s/m² at the temperature computed in step 3;
- being sufficient to satisfy the volume calculated in step 8.

The method for repairing a flexible flow line duct with a two-piece clamping collar and composite material can be characterised by the fabric of the bag referenced in step 10 having a weave where the space between threads is in the range of between 0.5 mm and 1.0 mm.

The method for repairing a flexible flow line duct with a two-piece clamping collar and composite material, can be characterised by the fastening means used in step 15 being selected from among bolts, jaws and quick-connect devices.

The method for repairing a flexible flow line duct with a two-piece clamping collar and composite material can be characterised by the method being applied preferably to birdcage-type failures.

The method for repairing a flexible flow line duct with a two-piece clamping collar and composite material can be characterised by the method being applied preferably to flexible ducts.

The invention is described below, by way of example only, with reference to the accompanying figures, in which:
Fig. 1 shows an example of a birdcage-type defect; and
Fig. 2 shows an example of how a defect can be repaired.

The disclosed method to repair a flexible flow line duct using a two-piece clamping collar and composite material was developed based on research designed primarily to develop alternatives to the corrective procedures currently available, providing the technical team with a method that enables faster intervention in the event of birdcage-type failures in flexible ducts.

As mentioned above, the existence of birdcage-type failures 20, as depicted in Fig. 1, normally require reducing the pressure in the duct 10, and consequently the output rate, or even stopping the line altogether. This interference in production lasts until all of the logistics operations currently required to replace defective sections can be completed, causing major delays.

Similar corrective measures using clamps and/or resin are known from prior art, but are all designed for application in rigid ducts. When these methods are applied to correct flexible ducts used to produce crude oil, they do not yield satisfactory results due to a number of specific details and characteristics of the affected components.

The present invention can provide a method whereby a long-lasting correction can be made to a birdcage-type failure using composite resin and two-piece clamping collars, yielding a result that is both reliable and low cost, and reducing the risk of new failures in the same section once the affected line is back in full and continuous operation.

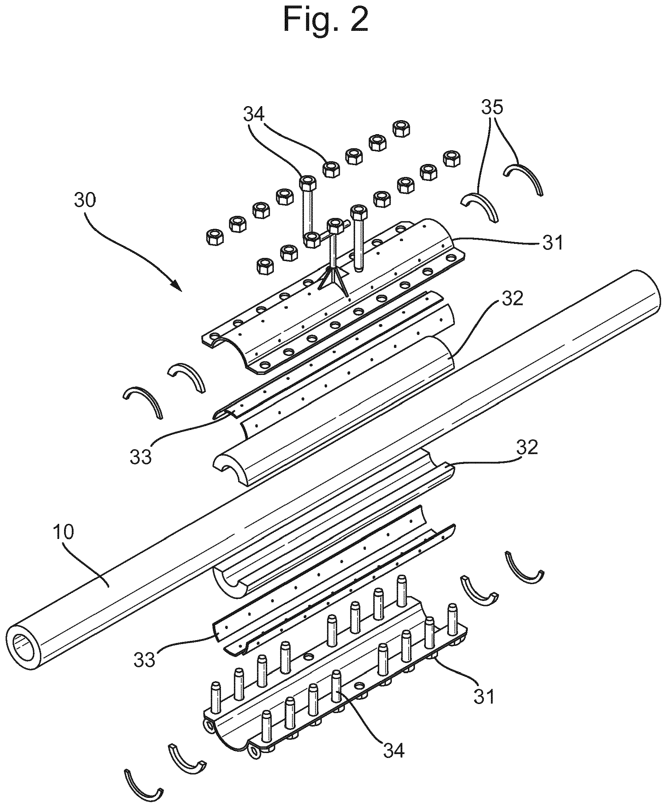

Thus the proposed method fulfils parameters such as resistance to the duct's working pressure, providing corrosion protection for the exposed section of line, and keeping this section from moving during the repair. An example of a repair according to method can be seen in Fig. 2. The method can comprise some or all of the following steps, preferably performed in the order presented below. It is noted that this method make specific reference to birdcage-type failures that occur underwater, but the invention is not necessarily limited to repairing only that type of defect.
Step 1: Visually inspect the state of repair of the outer polymer sheath of the flexible line 10 that has the defect, either remotely or not.
   It is important to know the extent to which the exposed steel mesh has been structurally compromised, such as the degree of oxidation, the existence of torn wires, incrustations, etc.
   The data gathered during this step makes it possible to size the equipment that will be used during the intervention.
   This and other on-site data gathering may be done by divers or using an ROV (Remotely Operated Vehicle), depending on the depth.
Step 2: Determine the parameters of the birdcage failure 20, either remotely or not.
   As the industrial estate can be comprised of kilometres of flexible ducts of all sorts of diameters, and diverse operating pressures, it can make more economic sense to manufacture a specific two-piece clamping collar for each failure incident than to keep an inventory of several items with different combinations of diameters, lengths and mechanical resistance.
   The dimensional characteristics of the birdcage 20 contribute to defining the size and extension of the section to be covered by the proposed structural reinforcement, which will also influence the manufacturing parameters for the components that will be used.
Step 3: Preferably together with Step 1 or Step 2, ascertain the depth and temperature at the location of the defect 20, and the descent time.
   These parameters are useful in the calculations for dosing the components of the epoxy resin to be used, and the curing process, so that mixture remains within the viscosity limits that will keep it perfectly malleable until the repair is completed.
Step 4: Determine the hydrostatic test pressure of the flexible duct 10, normally available in the manufacturer's data sheet.
   If this data is not available, an alternative is to use the operating pressure of the flexible duct in the manufacturer's data sheet, and apply a safety factor of e.g. not less than 1.5.
Step 5: Determine the dimensional parameters of the duct 10 to be repaired, available in the manufacturer's data sheet.
   In addition to the data obtained in step 2, also it is useful to know the model and the nominal diameter of the flexible duct 10, which are used as parameters for manufacturing the two-piece clamping collar that will be used for the repair.
Step 6: Thoroughly clean the exposed steel mesh of the flexible duct 10 (i.e. the area of the defect), as well as the surface of the polymer sheath in the section of duct 10 to be repaired.
Step 7: On land and together with step 6, arrange for the manufacture of the two-piece clamping collar 31 that will be used, which preferably fulfils some or all of the following parameters:
   - preferably manufactured of steel.
   - having an inside diameter up to 20% larger, optional up to 15% larger than the nominal design diameter of the flexible duct in question.
   - being provided with through-holes of up to 10 mm, optionally up to 6 mm in diameter, arrayed circumferentially along the clamp at intervals of around 50 mm, e.g. from 40 mm to 60 mm along the surface of each half-section of the two-piece clamping collar (i.e. arranged along the extent of the collar in the axial direction of the duct).
   - having a degree of mechanical resistance that is compatible with the parameters collected in step 4.
   - having a length that is compatible with the parameters collected in step 2;
Step 8: Calculate the volume of composite resin required for the repair procedure.
   The total amount of composite (e.g. epoxy) resin to be prepared is at least the volume of the annular space created between the outer wall of the flexible duct and the inside diameter of the two-piece clamping collar to be manufactured, and preferably includes an additional 20 to 30%.
   The resin to be prepared shall be split (see later steps) into two, preferably equal parts, packaged in bags 32 and placed on the inside of each section of two-piece clamping collar 31 (that is, one resin package 32 is placed inside one section 31, and the other resin package 32 is placed inside the other). When these are placed over the duct failure 20 and joined, the resin will penetrate the steel wire mesh of the birdcage 20, and the excess will flow out of the ends of the two-piece clamping collar and through small round holes placed in the two-piece clamping collar provided to allow the excess to leave.
   Thus, the total volume of composite resin is preferably sufficient to fill the interstices of the failure and the entire perimeter of the section covered by the two-piece clamping collar 31, making sure there are no gaps through which salt water could penetrate into the repair.
Step 9: Prepare the composite resin before all of the components are lowered to the application site, preferably according to one or more of the following parameters:
   - a composite epoxy resin reinforced with aramid type synthetic fibres.
   - the curing agent shall be dosed according to the descent time calculated in step 3, so that once it is mixed, the resin will arrive at the location where it will be applied with sufficient malleability to penetrate the birdcage mesh. This malleability characteristic is equivalent to a consistency preferably from 0.4 to 0.7 N.s/m², optionally from 0.5 to 0.6 N.s/m² at the temperature computed in step 3.
   - being sufficient to satisfy the volume calculated in step 8.
Step 10: Split the total volume of composite resin into two, preferably equal, volumes and pack each one in a bag 32 made with a warp and weft of natural fibres with a mesh such as to have the space between threads measure on the order of from 0.2 to 1.5 mm, optionally of from 0.5 to 1.0 mm.
   If the bag 32 is manufactured of synthetic fibre, because such fibres are continuous, the weft and warp will comprise continuous monofilaments, resulting in a weave where the space between threads is completely empty. This characteristic allows the composite resin to escape through the spaces between the threads during the descent to the work site, resulting in the volume of resin for application being smaller than the amount calculated, and thus compromising the quality of the repair.
   On the other hand, if the bags 32 are manufactured of synthetic fibre with a mesh such that the nominal space between threads is less than the proposed 0.2 to 1.2mm (and optionally 0.5 to 1.0 mm), the mesh will hold the composite resin until it reaches the work site. However, in this case the composite resin will be unable to ooze through the mesh efficiently when the two-piece clamping collar is closed around the flexible duct, resulting in resin impregnation gaps between the steel wires that make up the birdcage 20.
   That is, bags 32 of natural fibre have been identified as being particularly effective. As natural fibres are short, it is hypothesised that there will always be fibre-ends protruding from the threads of the warp and weft of the fabric, which tend to project into the gaps between threads, helping to form a barrier for the composite resin as it travels to the work site. However, this additional barrier does not keep the composite resin from oozing through the spaces between the threads when the bag 32 is compressed between the two sections of the two-piece clamping collar and the outer wall of the flexible duct.
Step 11: Attach each bag 32 of composite resin on the inside of each section of the two-piece clamping collar.
   The bags 32 can be attached to the two-piece clamping collar 31 by tying them with cords using the holes in each section of the two-piece clamping collar. Alternatively adhesive patches 33 can be used to attach the bags 32 to the collar 31.
Step 12: Place all of the material in the ROV (Remotely Operated Vehicle).
Step 13: Reduce the operating pressure in the line until the birdcage failure contracts and the layers before the steel mesh can be slightly compressed.
   In this step, the pressure in the line 10 is reduced, but not to zero, as the intact section of the flexible duct 10 will serve as support, opposing the pressure exerted by the two-piece clamping collar sections. If there is no ideal opposing pressure, the composite resin will be unable to extrude from the fabric bag and efficiently impregnate the interstices of the steel wire mesh and the remaining birdcage failure 20.
Step 14: Lower the two-piece clamping collar 31 with the fabric bags 32 filled with composite resin to the location where the failure 20 is, within the period of time calculated in step 3.
Step 15: Place the two-piece clamping collar 31 around the section with the failure 20 and attach it using a suitable means 34, such as bolts, jaws or quick connect devices.

Although the steps in the proposed method are well defined for design purposes, to those skilled in the art it will be easy to see that some steps could be performed in a different sequence or simultaneously without affecting the efficiency and the purpose to be attained. Further, the skilled reader will understand that not all steps are essential to the definition of the invention.

It is easy to see that the present invention not only helps eliminate the need to stop the flow line, it also helps eliminate the need to radically section the flexible duct, resulting in discontinuous sections.

Another advantage that enables the current proposal, beyond its easy assembly, is that it helps eliminate the need to mobilise specific, high cost vessels for several days.

In light of such evidence, there is no question that the proposed invention not only helps eliminate direct production losses, but also reduces the cost associated with the logistics of the teams and equipment dedicated to resolving the different birdcage-type incidents that can happen in a large size industrial estate.

The invention is described herein with reference made to its preferred embodiments. It should be clear however that this invention is not limited to these embodiments, and those skilled in the art will immediately realise that changes and substitutions are possible within the concept of invention described herein.

## Claims

1. A method for repairing a defect (20) in a flexible flow line (10), the method **characterised by** comprising the following steps:
providing a two-piece clamping collar (31);
preparing a composite resin;
splitting the total volume of composite resin into two, and packing each one in a separate fabric bag (32), each bag having a warp of natural fibres;
attaching a first one of the bags of composite resin to the inside of a first one of the pieces of the two-piece clamping collar, and attaching a second one of the bags of composite resin to the inside of a second one of the pieces of the two-piece clamping collar;
placing the two-piece clamping collar around the region of the flexible flow line containing the failure; and
securing said two-piece clamping collar with some means of fastening (34).

2. The method for repairing a defect in a flexible flow line according to claim 1, wherein each bag has a weave where the space between threads is in the range of from 0.2 mm to 1.5 mm, and optionally from 0.5 mm to 1.0 mm.

3. The method for repairing a defect in a flexible flow line according to claim 1 or claim 2, wherein the flexible flow line is underwater.

4. The method for repairing a defect in a flexible flow line according to any one of the preceding claims, wherein the defect is a birdcage-type failure.

5. The method for repairing a defect in a flexible flow line according to claim 4 when dependent from claim 3, wherein preparing the composite resin further comprises dosing the resin with curing agent based on the descent time to the flexible flow line so that, once mixed, the resin will arrive at the flexible flow line sufficiently malleable to penetrate the mesh of the birdcage failure.

6. The method for repairing a defect in a flexible flow line according to claim 5, wherein the dosing of the resin is also based on the temperature at the location of the birdcage failure.

7. The method for repairing a defect in a flexible flow line according to claim 4 or any claim dependent therefrom, further comprising reducing the operating pressure in the line until the birdcage failure contracts, and the defect can be slightly compressed during the step securing said two-piece clamping collar.

8. The method for repairing a defect in a flexible flow line according to any one of the preceding claims, wherein the composite resin is a composite epoxy resin reinforced with aramid type synthetic fibres.

9. The method for repairing a defect in a flexible flow line according to any one of the preceding claims, wherein the composite resin has a degree of malleability that is equivalent to a consistency between 0.4 and 0.7 N.s/m², optionally 0.5 and 0.6 N.s/m², at the temperature at the defect location.

10. The method for repairing a defect in a flexible flow line according to any one of the preceding claims, wherein volume of composite resin used for the repair is at least the volume of the annular space created between the outer wall of the flexible duct and the inside diameter of the two-piece clamping collar to be manufactured, and optionally includes from 20% to 30% more than that volume.

11. The method for repairing a defect in a flexible flow line according to any one of the preceding claims, wherein the steps of placing and securing are performed by an ROV.

12. The method for repairing a defect in a flexible flow line according to any one of the preceding claims, wherein by the two-piece clamping collar fulfils one or more of the following parameters:
being manufactured of steel;
having an inside diameter up to 15% larger than the nominal design diameter of the flexible duct in question;
being provided with through-holes of up to 10 mm in diameter, optionally up to 6 mm in diameter, arrayed circumferentially around the clamp at intervals of from 40 to 60 mm, optionally 50 mm, along the surface of each half-section of the two-piece clamping collar.

13. The method for repairing a defect in a flexible flow line according to any one of the preceding claims, **characterised by** the fastening means being selected from among bolts, jaws and quick-connect devices.

14. A kit for repairing a defect in a flexible flow line, the kit comprising:
a two-piece clamping collar (31);
a composite resin;
two fabric bags (34), each bag having a warp of natural fibres, and each bag being packed with part of the composite resin;
means for attaching (33) a first one of the fabric bags to the inside of a first one of the pieces of the two-piece clamping collar, and attaching a second one of the fabric bags to the inside of a second one of the pieces of the two-piece clamping collar;
means for fastening (34) for securing said two-piece clamping collar around a defect in a flexible flow line.

## Patentansprüche

1. Verfahren zum Reparieren eines Defekts (20) in einer flexiblen Leitung (10), wobei das Verfahren **dadurch gekennzeichnet ist, dass** es folgende Schritte umfasst:
Bereitstellen eines zweiteiligen Klemmrings (31);
Vorbereiten eines Verbundharzes;
Teilen des Gesamtvolumens des Verbundharzes in zwei Hälften und Füllen jeder Hälfte in eine separate Stofftasche (32), wobei jede Tasche Kettfäden aus natürlichen Fasern aufweist;
Anbringen einer ersten das Verbundharz umfassenden Tasche an der Innenseite eines ersten Teils des zweiteiligen Klemmrings und Anbringen einer zweiten das Verbundharz umfassenden Tasche an der Innenseite eines zweiten Teils des zweiteiligen Klemmrings;
Platzieren des zweiteiligen Klemmrings um den Bereich der flexiblen Leitung mit dem Defekt; und
Befestigen des zweiteiligen Klemmrings mittels einer Art von Befestigungsmittel (34).

2. Verfahren zum Reparieren eines Defekts in einer flexiblen Leitung nach Anspruch 1, wobei jede Tasche ein Gewebe aufweist, bei dem der Abstand zwischen Fäden in dem Bereich von 0,2 mm bis 1,5 mm, wahlweise von 0,5 mm bis 1,0 mm, liegt.

3. Verfahren zum Reparieren eines Defekts in einer flexiblen Leitung nach Anspruch 1 oder 2, wobei sich die flexible Leitung unter Wasser befindet.

4. Verfahren zum Reparieren eines Defekts in einer flexiblen Leitung nach einem der vorangehenden Ansprüche, wobei es sich bei dem Defekt um eine vogelkäfigartige Aufdoldung (engl. *birdcage-type failure*) handelt.

5. Verfahren zum Reparieren eines Defekts in einer flexiblen Leitung nach Anspruch 4 in Abhängigkeit von Anspruch 3, wobei das Vorbereiten des Verbundharzes weiterhin ein Versetzen des Harzes mit einem Härtemittel basierend auf der Abstiegszeit zu der flexiblen Leitung umfasst, so dass nach dem Vermischen das Harz bei der Ankunft an der flexiblen Leitung ausreichend verformbar ist, um das Geflecht der vogelkäfigartigen Aufdoldung zu durchdringen.

6. Verfahren zum Reparieren eines Defekts in einer flexiblen Leitung nach Anspruch 5, wobei das Versetzen des Harzes mit Härtemittel auch auf der Temperatur am Ort der vogelkäfigartigen Aufdoldung basiert.

7. Verfahren zum Reparieren eines Defekts in einer flexiblen Leitung nach Anspruch 4 oder jedem davon abhängigen Anspruch, weiterhin umfassend ein Reduzieren des Betriebsdrucks in der Leitung bis zum Zusammenziehen der vogelkäfigartigen Aufdoldung, wobei der Defekt während des Befestigens des zweiteiligen Klemmrings geringfügig komprimiert werden kann.

8. Verfahren zum Reparieren eines Defekts in einer flexiblen Leitung nach einem der vorangehenden Ansprüche, wobei das Verbundharz ein Verbundepoxidharz ist, das mit aramidartigen synthetischen Fasern verstärkt ist.

9. Verfahren zum Reparieren eines Defekts in einer flexiblen Leitung nach einem der vorangehenden Ansprüche, wobei das Verbundharz einen Verformbarkeitsgrad aufweist, der gleich einer Konsistenz zwischen 0,4 und 0,7 Ns/m², wahlweise 0,5 und 0,6 Ns/m², bei der Temperatur an dem Ort des Defekts ist.

10. Verfahren zum Reparieren eines Defekts in einer flexiblen Leitung nach einem der vorangehenden Ansprüche, wobei das Volumen des für die Reparatur verwendeten Verbundharzes mindestens das Volumen des zwischen der Außenwand des flexiblen Rohrs und dem Innendurchmesser des zu produzierenden zweiteiligen Klemmrings hergestellten kreisförmigen Raumes beträgt und wahlweise 20 % bis 30 % mehr als dieses Volumen umfasst.

11. Verfahren zum Reparieren eines Defekts in einer flexiblen Leitung nach einem der vorangehenden Ansprüche, wobei das Platzieren und das Befestigen von einem ferngesteuerten Unterwasserfahrzeug (engl. *remotely operated underwater vehicle* ROV) ausgeführt wird.

12. Verfahren zum Reparieren eines Defekts in einer flexiblen Leitung nach einem der vorangehenden Ansprüche, wobei der zweiteilige Klemmring ein oder mehrere der folgenden Parameter erfüllt:
Herstellung aus Stahl;
Aufweisen eines Innendurchmessers, der bis zu 15% größer als der Nenndurchmesser der betreffenden flexiblen Leitung ist;
Aufweisen von Bohrlöchern mit einem Durchmesser von bis zu 10 mm, wahlweise mit einem Durchmesser bis zu 6 mm, die um den Umfang des Klemmrings in Abständen von 40 mm bis 60 mm, wahlweise 50 mm, entlang der Fläche jeder Hälfte des zweiteiligen Klemmrings angeordnet sind.

13. Verfahren zum Reparieren eines Defekts in einer flexiblen Leitung nach einem der vorangehenden Ansprüche, **gekennzeichnet durch** eine Auswahl der Befestigungsmittel aus Bolzen, Klemmbacken und Schnellverbindungseinrichtungen.

14. Kit zum Reparieren eines Defekts in einer flexiblen Leitung, wobei das Kit Folgendes umfasst:
einen zweiteiligen Klemmring (31);
ein Verbundharz;
zwei Stofftaschen (34), wobei jede Tasche Kettfäden aus natürlichen Fasern aufweist und jede Tasche mit einem Teil des Verbundharzes befüllt ist;
Anbringungsmittel (33) zum Anbringen einer ersten Stofftasche an der Innenseite eines ersten Teils des zweiteiligen Klemmrings und zum Anbringen einer zweiten Stofftasche an der Innenseite eines zweiten Teils des zweiteiligen Klemmrings;
Befestigungsmittel (34) zum Befestigen des zweiteiligen Klemmrings um einen Defekt in einer flexiblen Leitung.

## Revendications

1. Procédé pour réparer un défaut (20) dans une ligne d'écoulement flexible (10), le procédé étant **caractérisé en ce qu'**il comprend les étapes suivantes consistant à :
prévoir un collier de serrage en deux parties (31) ;
préparer une résine composite ;
partager le volume total de la résine composite en deux, et emballer chacun dans un sac en tissu séparé (32), chaque sac ayant une chaîne de fibres naturelles ; fixer un premier des sacs de résine composite à l'intérieur d'une première des parties du collier de serrage en deux parties, et fixer un second des sacs de résine composite à l'intérieur d'une seconde des parties du collier de serrage en deux parties ;
placer le collier de serrage en deux parties autour de la région de la ligne d'écoulement flexible contenant la défaillance ; et
fixer ledit collier de serrage en deux parties avec un moyen de fixation (34).

2. Procédé pour réparer un défaut dans une ligne d'écoulement flexible selon la revendication 1, dans lequel chaque sac a un tissage où l'espace entre les fils est dans la plage de 0,2 mm à 1,5 mm et facultativement de 0,5 mm à 1,0 mm.

3. Procédé pour réparer un défaut dans une ligne d'écoulement flexible selon la revendication 1 ou la revendication 2, dans lequel la ligne d'écoulement flexible est sous l'eau.

4. Procédé pour réparer un défaut dans une ligne d'écoulement flexible selon l'une quelconque des revendications précédentes, dans lequel le défaut est une défaillance de type cage d'oiseau.

5. Procédé pour réparer un défaut dans une ligne d'écoulement flexible selon la revendication 4 lorsqu'elle dépend de la revendication 3, dans lequel l'étape consistant à préparer la résine composite comprend en outre l'étape consistant à doser la résine avec un agent de durcissement en fonction du temps de descente dans la ligne d'écoulement flexible de sorte que, une fois mélangée, la résine arrive au niveau de la ligne d'écoulement flexible de manière suffisamment malléable pour pénétrer dans la maille de la défaillance de cage d'oiseau.

6. Procédé pour réparer un défaut dans une ligne d'écoulement flexible selon la revendication 5, dans lequel le dosage de la résine dépend également de la température à l'emplacement de la défaillance de cage d'oiseau.

7. Procédé pour réparer un défaut dans une ligne d'écoulement flexible selon la revendication 4 ou l'une quelconque des revendications dépendant de cette dernière, comprenant en outre l'étape consistant à réduire la pression de fonctionnement dans la ligne jusqu'à ce que le défaut de cage d'oiseau se contracte, et que le défaut puisse être légèrement comprimé pendant l'étape consistant à fixer ledit collier de serrage en deux parties.

8. Procédé pour réparer un défaut dans une ligne d'écoulement flexible selon l'une quelconque des revendications précédentes, dans lequel la résine composite est une résine époxy composite renforcée avec des fibres synthétiques de type aramide.

9. Procédé pour réparer un défaut dans une ligne d'écoulement flexible selon l'une quelconque des revendications précédentes, dans lequel la résine composite a un degré de malléabilité qui est équivalent à une consistance comprise entre 0,4 et 0,7 N.s/m², facultativement 0,5 et 0,6 N.s/m², à la température à l'emplacement du défaut.

10. Procédé pour réparer un défaut dans une ligne d'écoulement flexible selon l'une quelconque des revendications précédentes, dans lequel le volume de la résine composite utilisé pour la réparation est au moins le volume de l'espace annulaire créé entre la paroi externe du conduit flexible et le diamètre interne du collier de serrage en deux parties à fabriquer, et comprend facultativement de 20% à 30% de plus que ce volume.

11. Procédé pour réparer un défaut dans une ligne d'écoulement flexible selon l'une quelconque des revendications précédentes, dans lequel les étapes de mise en place et de fixation sont réalisées par un ROV.

12. Procédé pour réparer un défaut dans une ligne d'écoulement flexible selon l'une quelconque des revendications précédentes, dans lequel le collier de serrage en deux parties satisfait un ou plusieurs des paramètres suivants :
être fabriqué à partir d'acier ;
avoir un diamètre interne jusqu'à 15% plus grand que le diamètre de conception nominal du conduit flexible en question ;
être prévu avec des trous débouchants jusqu'à 10 mm de diamètre, facultativement jusqu'à 6 mm de diamètre, disposés de manière circonférentielle autour du serrage à des intervalles de 40 à 60 mm, facultativement 50 mm, le long de la surface de chaque demi-section du collier de serrage en deux parties.

13. Procédé pour réparer un défaut dans une ligne d'écoulement flexible selon l'une quelconque des revendications précédentes, **caractérisé par** les moyens de fixation qui sont sélectionnés parmi les boulons, les mâchoires et les dispositifs à raccordement rapide.

14. Kit pour réparer un défaut dans une ligne d'écoulement flexible, le kit comprenant :
un collier de serrage en deux parties (31) ;
une résine composite ;
deux sacs en tissu (34), chaque sac ayant une chaîne de fibres naturelles, et chaque sac étant emballé avec une partie de la résine composite ;
un moyen pour fixer (33) un premier des sacs en tissu à l'intérieur d'une première des parties du collier de serrage en deux parties, et fixer un second des sacs en tissu à l'intérieur d'une seconde des parties du collier de serrage en deux parties ;
un moyen de fixation (34) pour fixer ledit collier de serrage en deux parties autour d'un défaut dans une ligne d'écoulement flexible.
